# EUROPEAN PATENT APPLICATION

(11) **EP 4 393 359 A1**
(43) Date of publication of application: **03.07.2024**
(21) Application number: 24150001.6
(22) Date of filing: 01.01.2024
(51) Int. Cl.: A47J 37/07

(54) **A GRILL DEVICE**

(30) Priority: 01.01.2023 IL 29962923
(71) Applicant: Kitchen Line Ori Ltd, 4900617 Petah Tikva (IL)
(72) Inventor: LAVI, Ori, 4660042 Herzliya (IL)
(74) Representative: Harrison IP Limited

(57) **Abstract**

A multi-floor grill device with a plurality of working surface types arranged adjacent each other and interfacing each other to create stations for processing foodstuff in a grill device in a convenient way. Drip ducts or trays are relocated to a bottom floor beneath a top floor that accommodates the working surfaces. A plurality of gas burners are placed under a cooking grid and may be covered with heat plates with fins that interrupt solid residues falling off of cooked foodstuff on the grid from resting and accumulating on the plates. Working surfaces for processing the foodstuff before cooking are placed at the front of the top floor and made conveniently accessible to a user. These surfaces receive induced heat from the cooking grid that pre-warms the foodstuff before cooking and shortens its cooking time.

## Description

### Technical Field

The present invention pertains to a grill device. In particular, the present invention pertains to a multi-floor, multi- working-surface design of a grill device that integrates several working surfaces and fluid collecting trays into a single platform. This integration makes these working surfaces more conveniently accessible to the user and renders the processing of food advantageous and more efficient than its processing in current designs of grill devices.

### Background

Current grill devices are designed with a main surface of a cooking grid, a main body that accommodates a set of gas burners under the cooking grid, a control panel with gas control knobs, which are connected to the gas burners and a hood above the cooking grid. Some grill devices also contain grease trays at the sides of the cooking grid to let excess of meat fat and juice drip down and be collected in a bottom tray and an after-cooking rack at the back of the cooking grid that keeps the cooked food warm and frees up working area of the cooking grid. In other designs, drainage of excess juices takes place into a drip duct at the front side of the cooking grid above the control panel and beside the cooking grid. Preparation of the foodstuff before cooking is usually done on a separate auxiliary table beside the grill device. Such designs are limited because the cooking grid that takes most of the working area and the front drainage duct do not leave space for a working surface close to the front panel for preparing foodstuff before cooking. The cooking grid also limits comfortable access to the back after-cooking rack and makes the side or auxiliary grease trays only partly useful. Another faulty design is slope shaped heat plates that cover the open flame gas burners under the cooking grid. These plates accumulate solid residues on their top and/or sides that fall off of the food items, which are cooked on the cooking grid. As a result, these residues are not collected at a bottom tray and are left on the heat plates for cleaning. Another disadvantage of current designs of grill devices is the straight shape of the front side of the storage cabinet and/or lower body of the grill device that carries the cooking grid on top. Such a straight front side limits a user from conveniently approaching the working surfaces when standing in front of the device.

It is, therefore, an object of the present invention to provide a grill device with a design and elements that overcome the problems and disadvantages of current grill devices.

It is yet another object of the present invention to provide a grill device with a design that further imparts additional elements and capabilities for improved operation.

This and other objects and embodiments of the present invention will become apparent as the description proceeds.

### Summary

In one aspect, the invention is a grill device that integrates all the working surfaces in the sequence of processing foodstuff on a grill. In particular, the grill device comprises these working surfaces adjacent one to the other and conveniently accessible to a user, so that processed foodstuff can be easily transported between processing stations. In still another embodiment, the arrangement of the working surfaces in the grill device provides additional improvement to the cooking process by exploiting their relative location to use induced heat from the cooking grid to pre-warm the foodstuff, e.g. meat, before cooking and shorten the cooking time on the grid. This arrangement of working surfaces in the grill device is made possible by relocating the drip duct or side trays to a lower floor under an upper floor that accommodates the working surfaces. The advantage of this configuration is at least two-fold. It releases a significant working space, which is easily accessible to the user. It practically eliminates the distances between the working surfaces, which allows passing the foodstuff from one processing station to another without carrying it. At the same time it uses the induced heat from the cooking grid to pre-warm the foodstuff on the front working surface before cooking. Further, the front pre-warming surface can be grated to allow excess fluids to drip down to a drip duct or tray directly under it at the lower floor.

In one embodiment, the front pre-warming surface may be used as a working surface for preparing the foodstuff before cooking, e.g. cutting, cleaning, defrosting. Accordingly, in a further particular design, the pre-warming surface is configured to carry a working board to process the foodstuff before cooking. Such a working board can be firmly held in place on the pre-warming surface with securing means. Such securing means may be a solid frame around the borders of the pre-warming surface that matches the dimensions of the working board or two or more pillars, each at a corner of the pre-warming surface, that match the edges of the working board and mechanically lock it in place. Such frame and pillars are designed to frictionally engage with the working board and secure it in place, particularly when processing foodstuff on it. The working board can be released by simply removing it off of the pre-warming surface.

In another embodiment, the grill device of the present invention further improves convenience and accessibility of the working surfaces to a user with an inwardly sloped shape of the lower edge of the cabinet or body that carry the working surfaces. Such sloped shape of the cabinet/body enables the user to reach closer to the working surfaces and better control the cooking process in all the stations.

The following description details aspects and embodiments of the grill device of the present invention without departing from its scope as described above and with reference to the accompanying drawings.

### Brief Description of the Drawings

**Fig. 1** illustrates a perspective view of the grill of the present invention.
**Fig. 2** illustrates a front view of the grill with another particular configuration of its front panel.
**Fig. 3** illustrates a front view of the grill with another particular configuration of its front panel.
**Fig. 4** illustrates a rear view of the grill
**Fig. 5** illustrates a top view of the grill's working area with additional working surfaces.
**Fig. 6** shows the perspective top view of the grill with additional working surfaces.
**Fig. 7** shows inner working parts of the grill including a particular design of gas burners.
**Fig. 8** shows a close-up view of the inner parts of the grill.
**Fig. 9** shows a lower liquid accumulation tray of the grill under its working areas..
**Fig. 10** shows inner parts of the grill including gas operation and residues accumulating lower tray.
**Fig. 11** shows a top view of the grill with an array of elongated burners located under the grill plates.
**Fig. 12** shows a perspective view of the entire grill without the grill plate, exposing an array of burner under it.
**Figs. 13-16** show the grill with detachable covers on its walls.
**Fig. 17** shows the collecting tray under the working surfaces of the grill.
**Fig. 18** shows the lower part of the grill with an array of gas operation parts and gas safety valve.
**Fig. 19** shows inner parts of the grill additional working surfaces on its pre-warming surfaces.
**Fig. 20** shows the array of burners in an operational mode.
**Figs. 21a****-h** show an array of burners gradually ignited to operational mode.
**Figs. 22-26** illustrate another embodiment of the grill of the present invention.
**Fig. 27** illustrates additional features of the collecting trays floating under the working surfaces and between the trays and the grill surface.
**Fig. 28** illustrates a partially exploded view of the front of the grill with the features shown in **Fig. 27****.**
**Fig. 29** illustrates another partially exploded view of the front of the grill with the features shown in **Fig. 27****.**
**Fig. 30** illustrates a bridge laid over the sides of the floating collecting trays under the working surface one side and the cooking grid on the other side.
**Fig. 31** illustrates a close up view of the bridge shown in **Fig. 30****.**

### Detailed Description of the Drawings

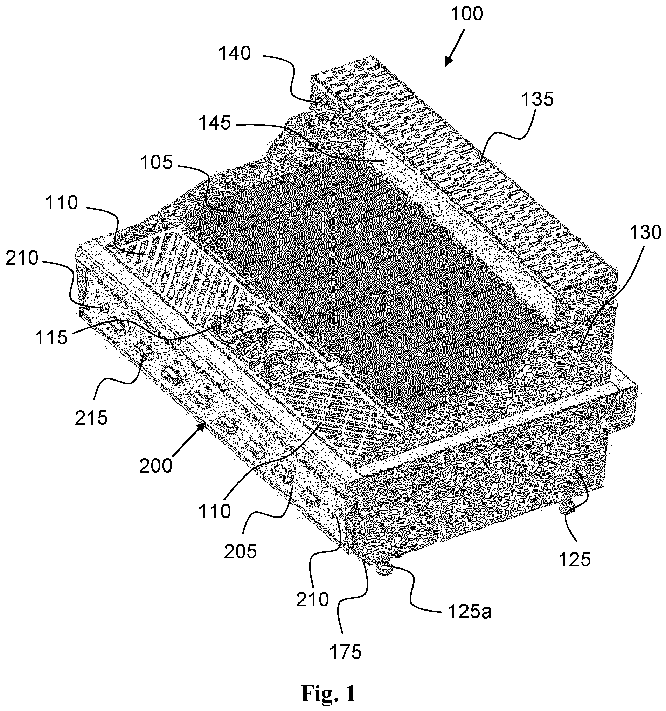

**Fig. 1** is a perspective view illustration of the grill device **100** of the present invention. Its main parts are the cooking grid **105,** pre-warming and working surfaces **110,** control panel **200** and after-cooking grid **135.** Other parts of the grill device **100** include lower cabinet or body **125,** seasoning bowls **115** and wing shields **130.** The lower cabinet/body **125** may be adjusted to the floor on which it stands with leveling legs **125a.**

This arrangement integrates these working surfaces, **105, 110** and **135** in one area and makes them conveniently accessible to a user who stands in front of the control panel **200** and operates the grill device **100.** Particularly, the pre-warming surfaces **110** are located near the front edge of the grill device to allow the user to treat and process the foodstuff before placing it on the cooking grid **105.** The seasoning bowls **115** are also located within hands reach between working/pre-warming surfaces **110** to treat the foodstuff before and during cooking.

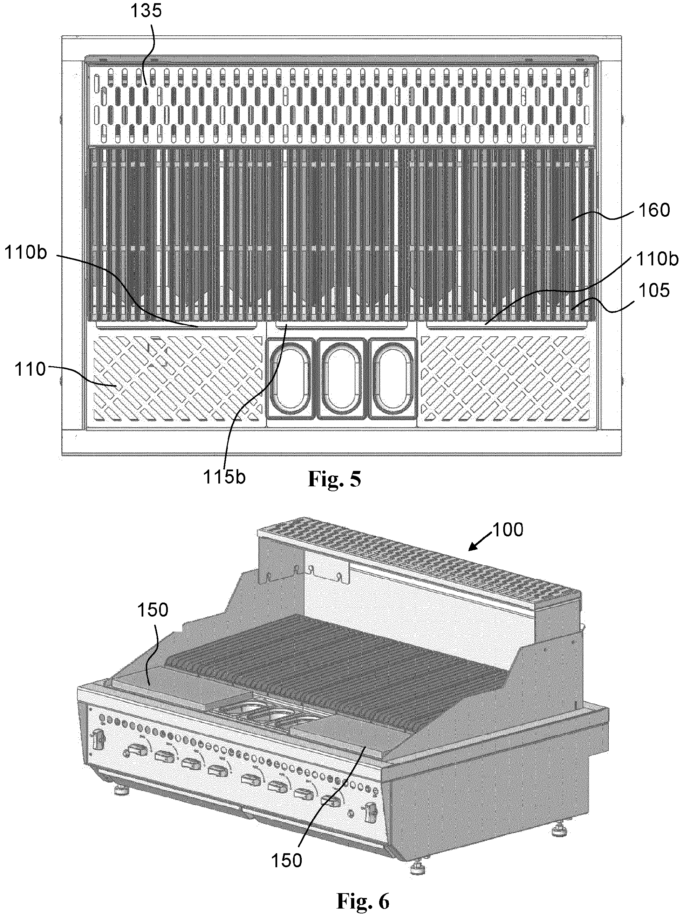

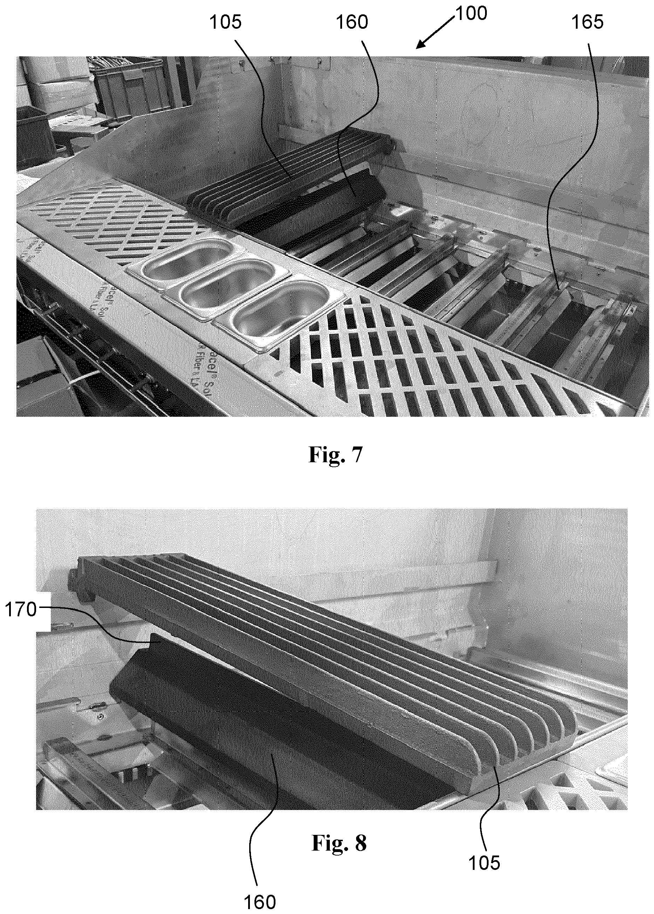

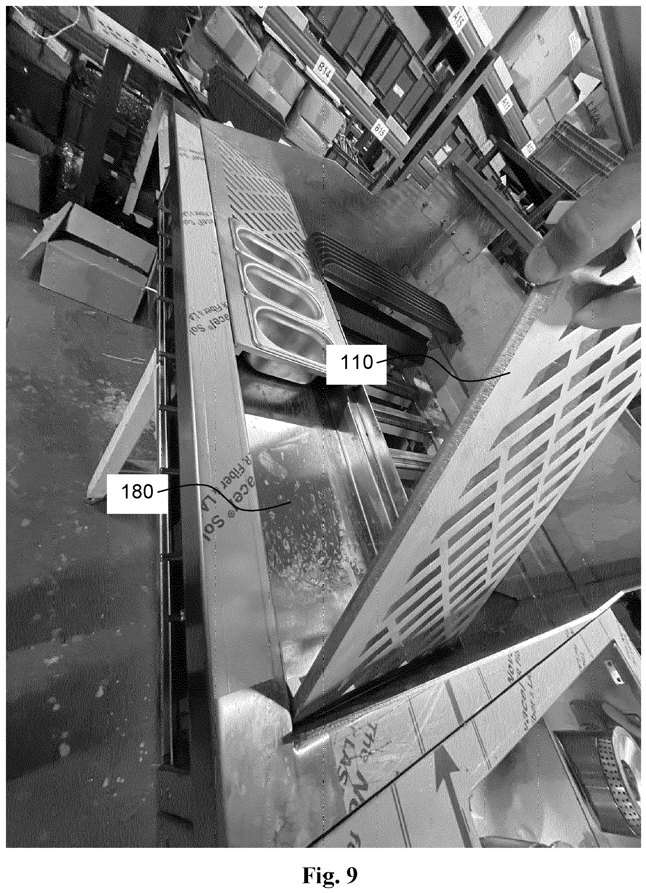

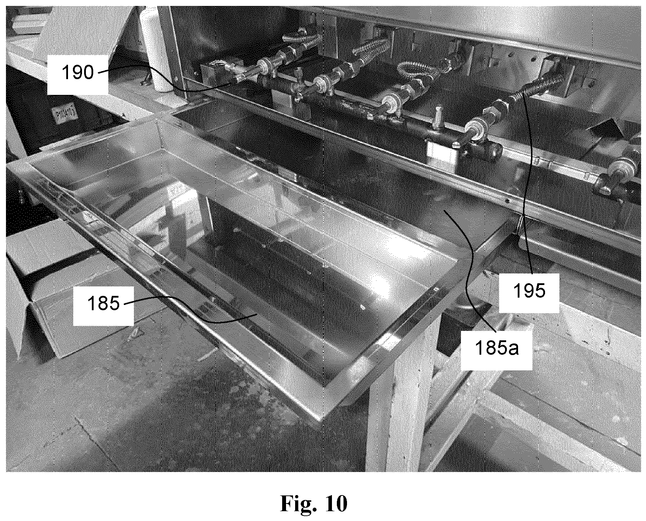

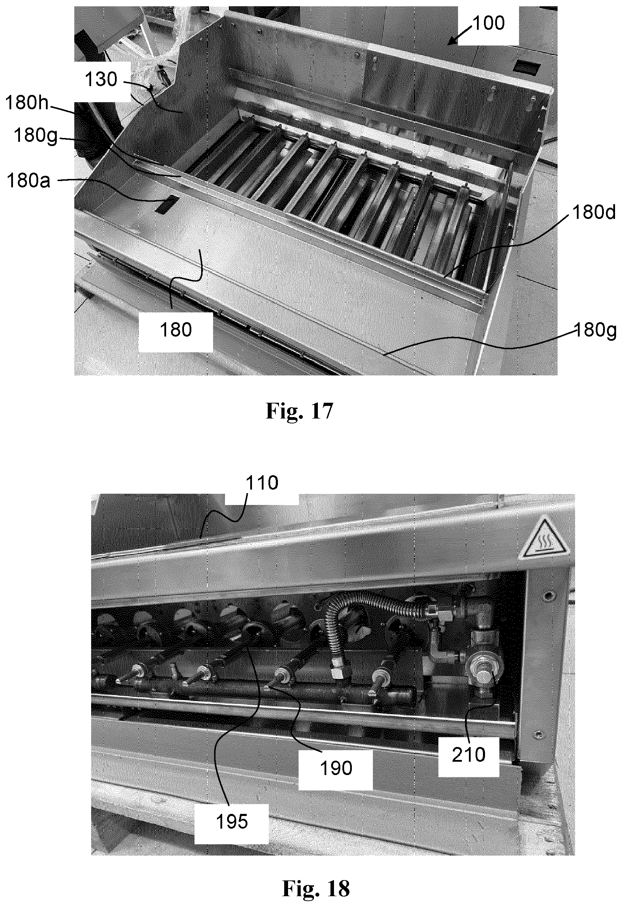

The working surfaces **105** and **110** are in the upper floor of the grill device and are grated to allow fluids and residues to drip down to collecting trays in the lower floor of the device. The pictures in **Figs. 9** and **10** show the collecting trays **180** and **185** under the working surface **110** and cooking grid **105,** respectively. The collecting tray **180** under the working s surfaces can be slightly sloped to concentrate the dripped fluids on one side or a selected volume of the trays. **Fig. 17** shows the collecting tray **180** under the working surfaces **110** with a drainage hole **180a** that lets the fluids from processed food on the working surfaces **110** flow down to the collecting tray **185** instead of accumulating on tray **180.** The tray under the cooking grid **105** is actually a double tray. Tray **185** is placed inside tray **185a** and accommodates only part of it, specifically its proximal part under tray **180.** Tray **185,** therefore receives the fluids that drain out of the processed food on the working surface **110.** The other distal part of **185a** is located under the cooking grid **105** and collects the solid parts and residues that fall off of the foodstuff that is cooked on the grid through its grate. This way the fluid and solid residues are collected separately from each other, letting better handling of the waste. Tray **185a** can be pulled out from under the cooking grid and working surfaces. Then tray **185** can be taken out and drained off of the fluid waste and the distal part of tray **185a** can be cleaned from the solid residues. When falling through the grate, the solid residues rest and accumulate on the heat plates **160** that cover the open fire gas burners **165** as shown in **Fig. 7****.** To prevent this, the heat plates **165** comprise a fin **170** at their top part and along their length that prevents solid parts from resting on top of the plates and accumulating there, see **Fig. 8****.** Fin **170** interrupts the falling and accumulation of such solid residues on top of the heat plates **160** through the grate and forces them down the slope of the plates and into the collecting tray **185** beneath. **Fig. 5** shows a top view illustration of the top working area of the grill device with the heat plates **160** made more visible through the grate of the cooking grid **105.**

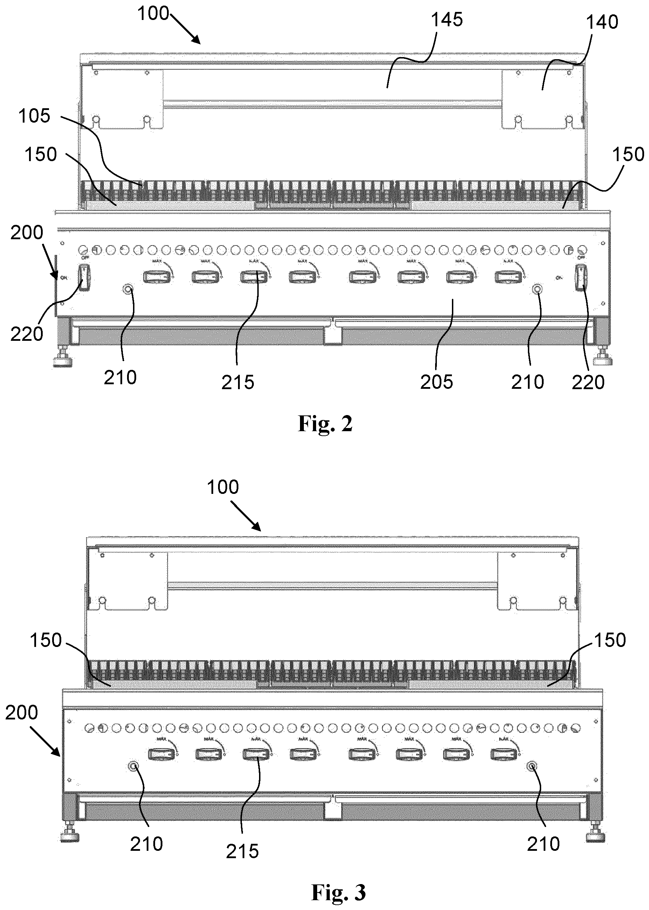

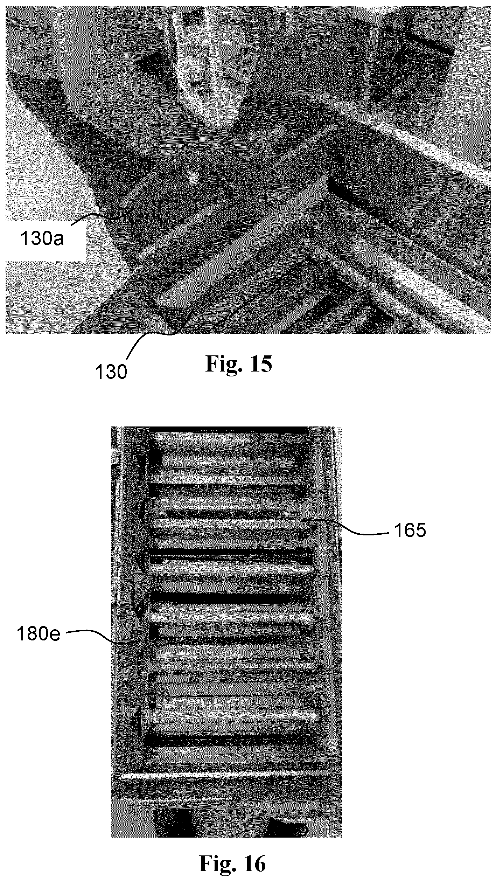

The control panel **200** comprises a front wall **205,** from which gas knobs **215** protrude. The control panel may have several configurations as illustrated in **Figs. 1-3****.** **Fig. 1** shows the control panel **200** with a number of burner knobs **215.** The number of knobs is equal to the number of burners **165** of the grill device **100.** Safety valve(s) **210** keep gas pressure constant to prevent overpressure in the gas pipes. Ignition knob(s) **220** ignite the gas at the gas burners after opening gas flow to the burners with gas control knobs **215.** The ignition knob **220** and gas knob **215** provide a double control on turning the gas flame on. **Fig. 16** shows safety valve **210** that keeps the gas pressure in the gas pipes normal and drains out excess gas.

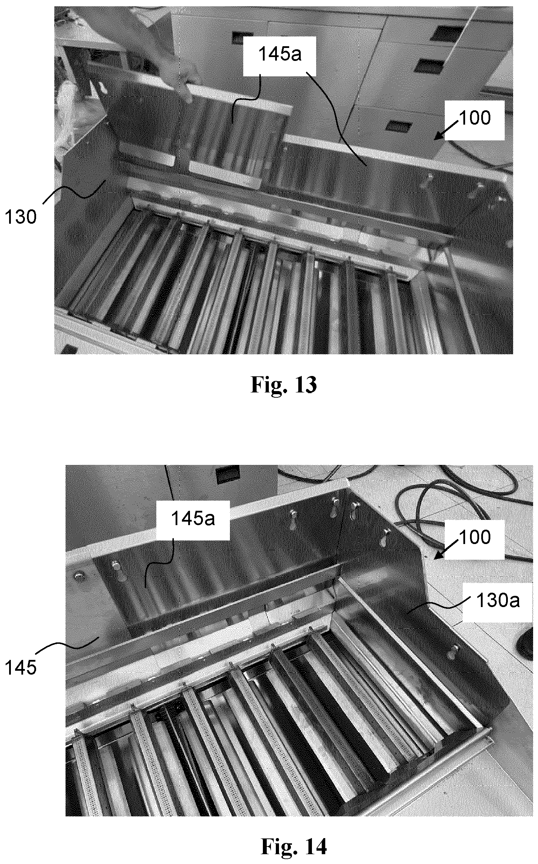

The four variations of the control panel **200** of the grill device in **Figs. 1-3** are only representatives of the arrangements and use of the different gas control knobs and valves that may be used. Different combinations of the arrangements of knobs **215** and valves in **Figs. 1-3** are contemplated within the scope of the present invention. **Figs. 13-16** show that the support back **145** and side shields **130,** respectively, and the walls around the burners **165** of the grill is covered with detachable covers **145a** and **130a.** These covers protect the metallic body of the grill from overheating, strain-stress and cooling-relaxation cycles due to high heat, burning, and twisting and weakening of overtime and use. Since these covers are detachable, they are also replaceable with new covers after exhausting their service life. As a result, the grill enjoys a considerably longer service life and is maintained in a highly operative mode for a longer period of time. In addition, these covers protect the grill walls and sensitive parts from accumulated grease, food residues and dirt. Because they are detachable, they can be easily taken out for washing and cleaning from food residues and grease, which are accumulated in the preparation of food on the grill. This makes cleaning and maintenance of the grill easier, without requiring cleaning and washing the entire body of the grill. A further advantage is in separating its structural parts from operational ones such as the gas burners and preventing water and detergents from filtrating into the gas burners and creating corrosion and wear over time.

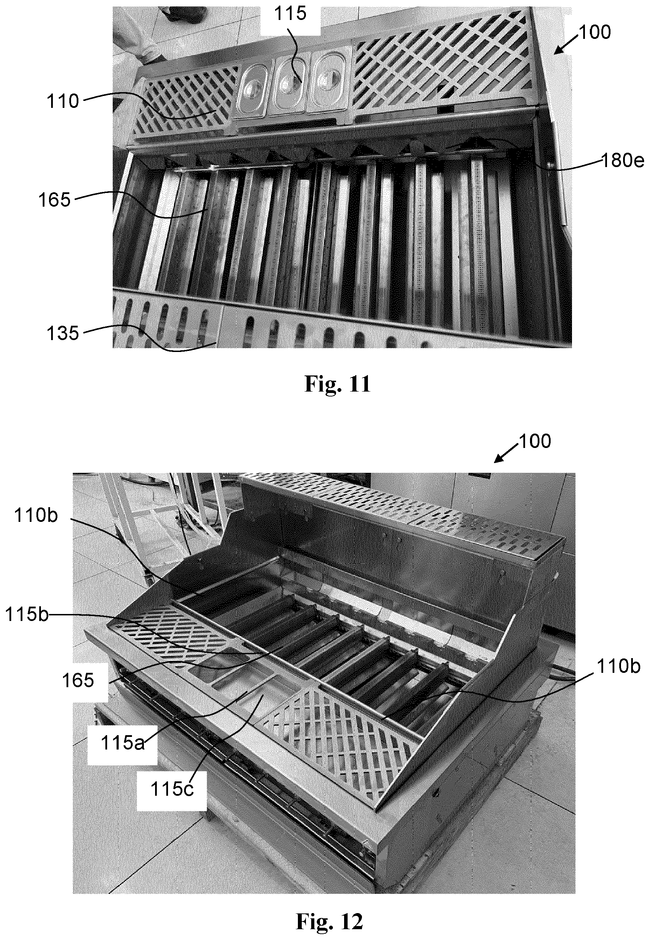

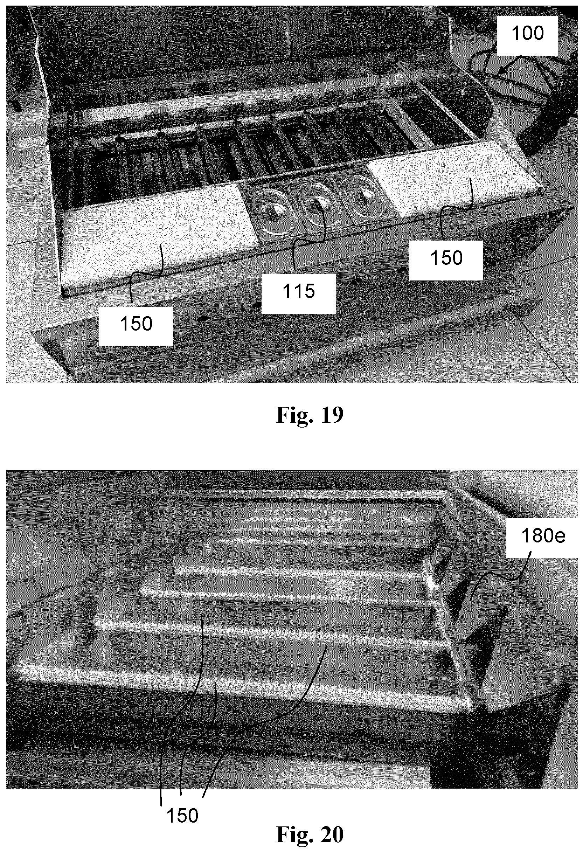

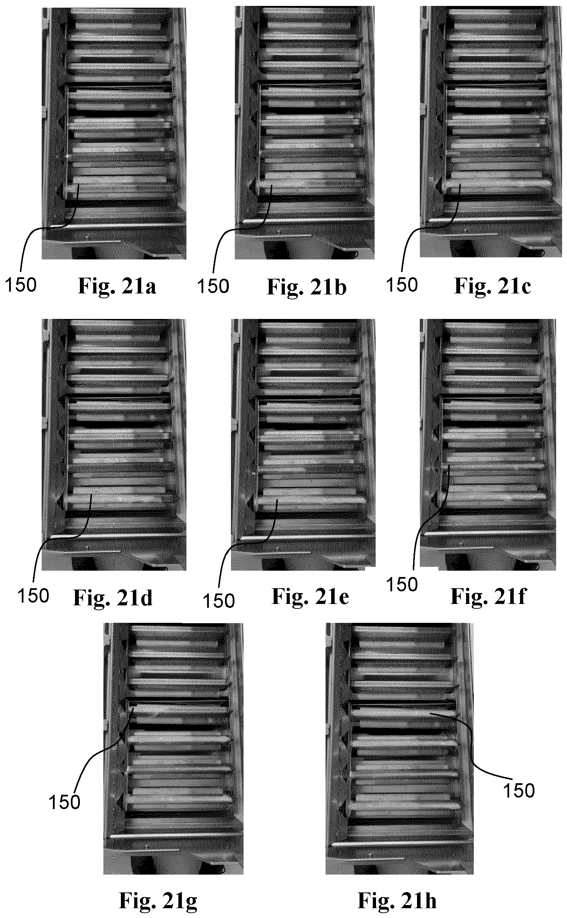

**Fig. 10** shows gas pipes **195** connecting between the operational part **190** of the gas knobs **215** and gas burners **165,** see **Fig. 7** for example. Rectangular, elongated burners **165** with a plurality of outlet holes may be used in the grill device **100** of the present invention as shown in **Fig. 11****.** As shown, burner **165** has a rectangular shape with a plurality of gas outlets along its length. **Fig. 18** shows the array of gas pipes **195,** the operational part of the gas knobs **190** and gas at the lower floor of the grill part of the grill with an array of gas operation parts and gas safety valve **210.** A plurality of rectangular gas burners **165** are arranged parallel each other along the length of the cabinet or body of the grill device. The shape of the rectangular burner **165,** gas pressure and streaming speed in the pipe from the gas tank to the burner and along the length of the burner generates a stable and steady, high temperature flame along its entire length. **Fig. 18** shows the array of gas burners **165** in an operational mode. The rectangular burners **165** are designed with a plurality of outlets and inner shape to control the rate and intensity of gas flow and produce gas flames at optimal temperature and consistency. As shown in **Fig. 20****,** the flame is stable, steady and clean at a high temperature without gas bursts along the entire length of the burners **165** and extending above from the plurality of outlets of the burners. **Figs. 21a****-h** exemplify the mode of ignition of an array of burners in a series of photos. As shown, the burners are ignited in a serial mode, where the ignition of every burner starts at the gas inlet point and advances as the gas proceeds to flow along the burner at a stable, steady high temperature flame along entire length of said gas burners.

The partial hood of the grill device **100** also comprises a top after-cooking grid **135,** which can be used as an after-cooking surface for placing cooked foodstuff, e.g. meat steaks. This top after-cooking grid **135** has a support back **145** that also closes the back side of the cooking grid **105,** and side supports **140** that connect to side shields **130** of the grill device. The combination of the top after-cooking grid **135,** support back **145,** side supports **140** and side shields **130** creates a partial hood above the cooking surface **105** of the grill device.

To make the working surfaces **110, 105** more conveniently accessible to a user, the bottom edge **175** of the cabinet/body **125** is sloped inwards, to allow the user stand closer to the working surfaces and more easily reach the processed foodstuff in the different stations.

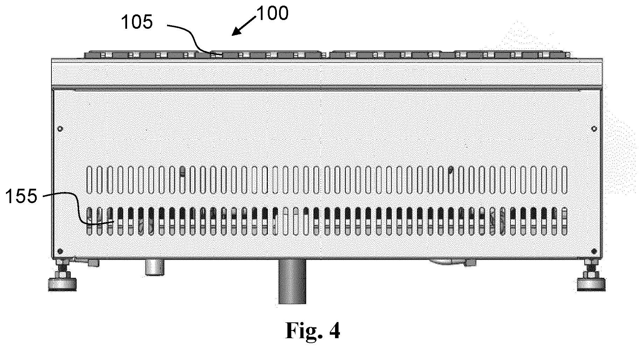

**Fig. 4** illustrates the back side of the body/cabinet **125,** with air outlets **155** to release heat out of the inner space of the cabinet/body to the surrounding, ventilate the air inside and cool it.

**Fig. 6** illustrates working boards **150** placed on the working surfaces **110** to process the foodstuff before cooking. **Fig. 19** shows actual working boards **150** placed on top of the working surfaces **110.** Such a working board can be placed and sit firmly on the working surface without securing means due to its weight. In another option, the working boards are firmly held in place on the pre-warming/working surface with securing means. Such securing means may be poles extending up from corners of the working surface diagonally positioned relative each other and introduced into the working boards. Alternatively, the securing means may be a solid frame around the borders of the pre-warming surface that matches the dimensions of the working boards or two or more poles diagonally positioned relative each other at the corners of the working surface that match the edges of the working board and mechanically lock it in place. Such frame and poles are designed to frictionally engage with the working boards and secure them in place, particularly when processing foodstuff on them. The working board **150** can be released by simply removing it off of the pre-warming/working surface **110.**

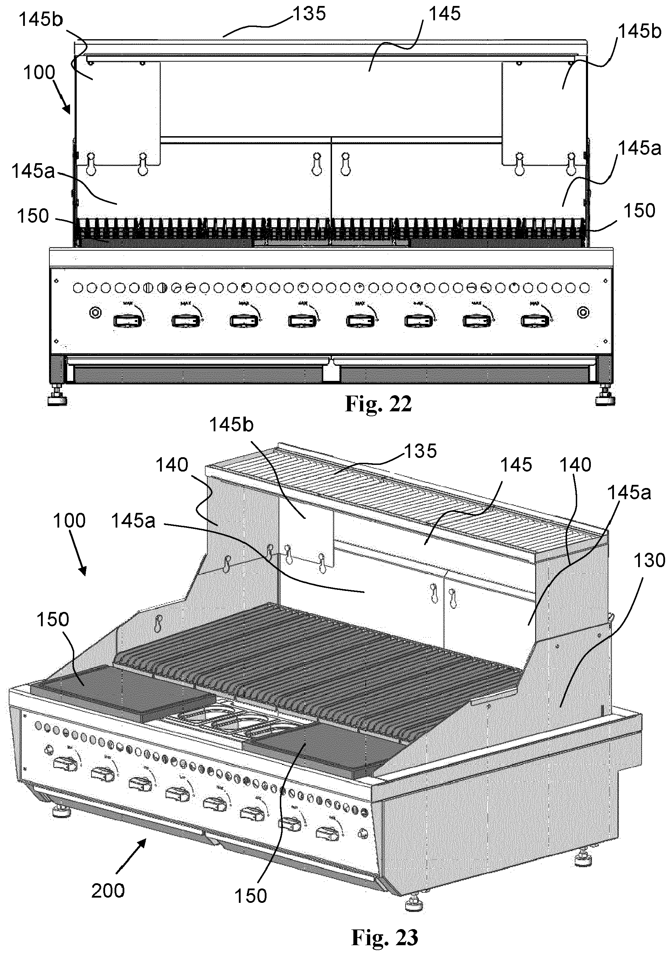

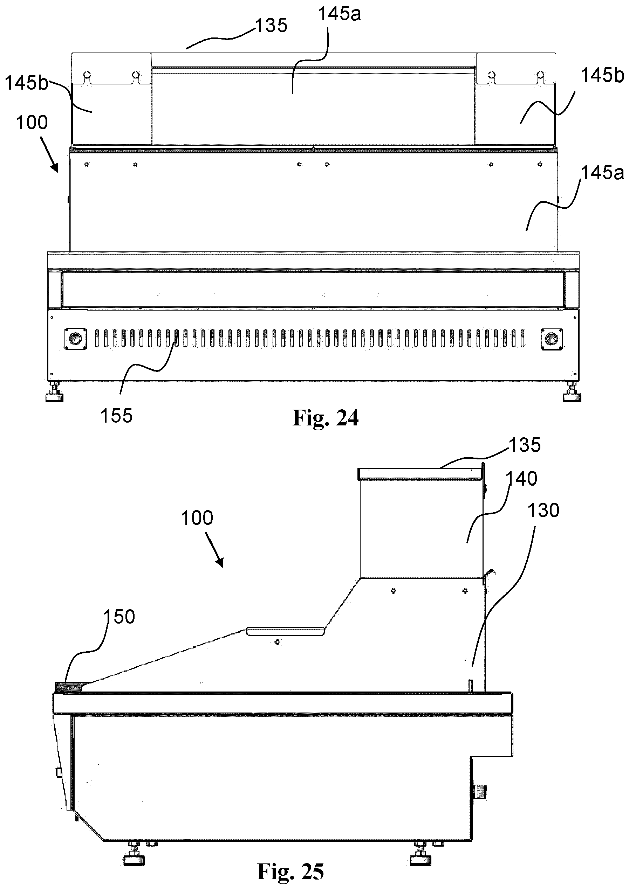

**Figs. 22-26** illustrate another embodiment of the grill of the present invention, in which the top after-cooking grid **135** is further elevated above the cooking grid **105.** This is done by extending the support back **145** further up with horizontal **145b** and vertical **145c** plates and extended side walls **140** all attached to side shields **130.** Another modification is further distancing the working boards **150** from the cooking grid **105.** The gap **150a** between the working boards **150** and the cooking grid **105** thermally insulates the working boards **150** from the cooking grid **105.** As a result, foodstuff processed on the working boards **150** can be warmed by the heat that the cooking grid **105** induces on its surroundings without cooking it. In addition, the working boards **150** are made closer to the edge of the grill **100,** thus facilitating an easier and more convenient access for a user standing beside the grill **100** and processing foodstuff on the working boards **150** before cooking.

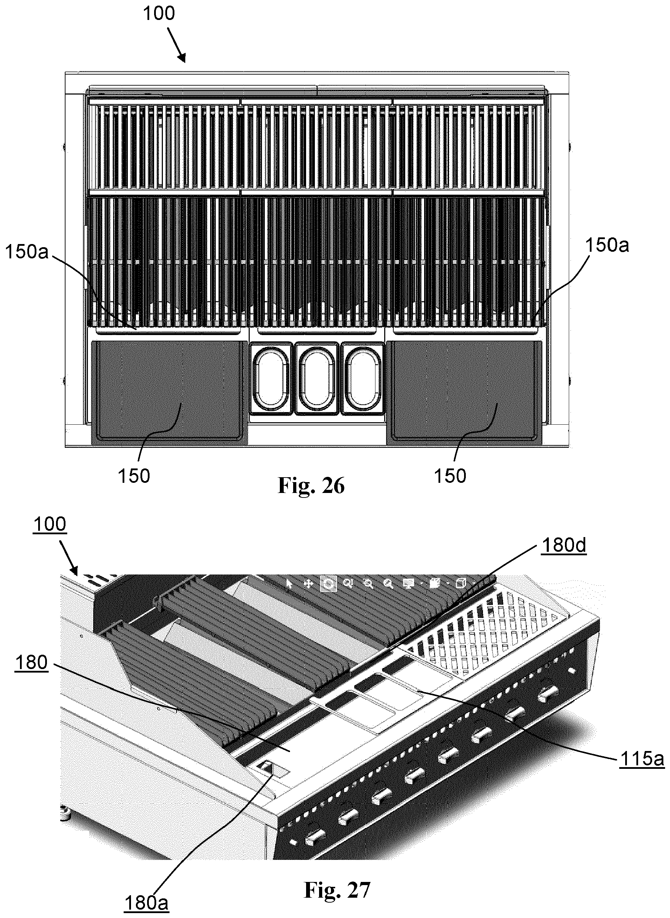

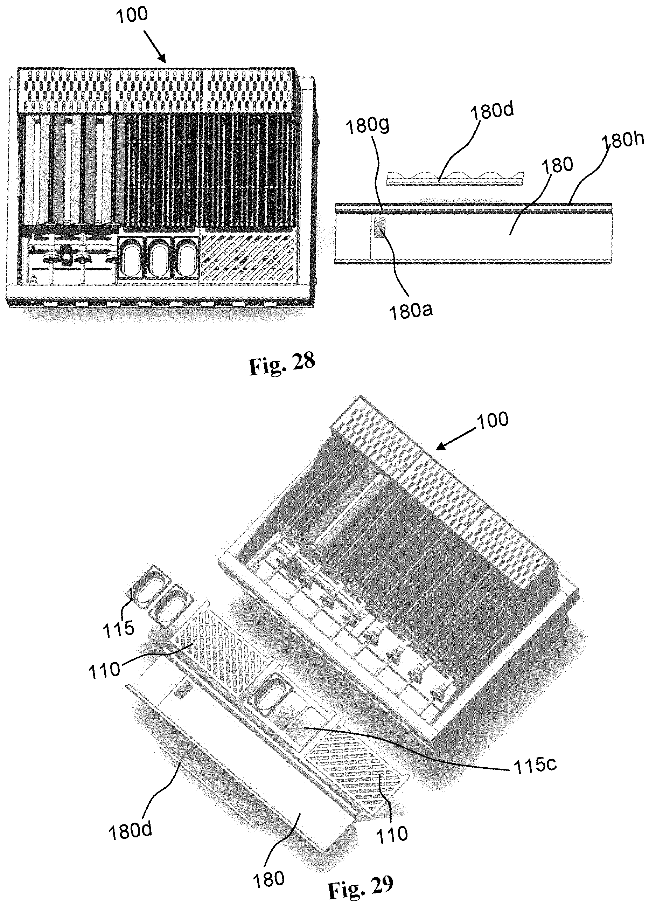

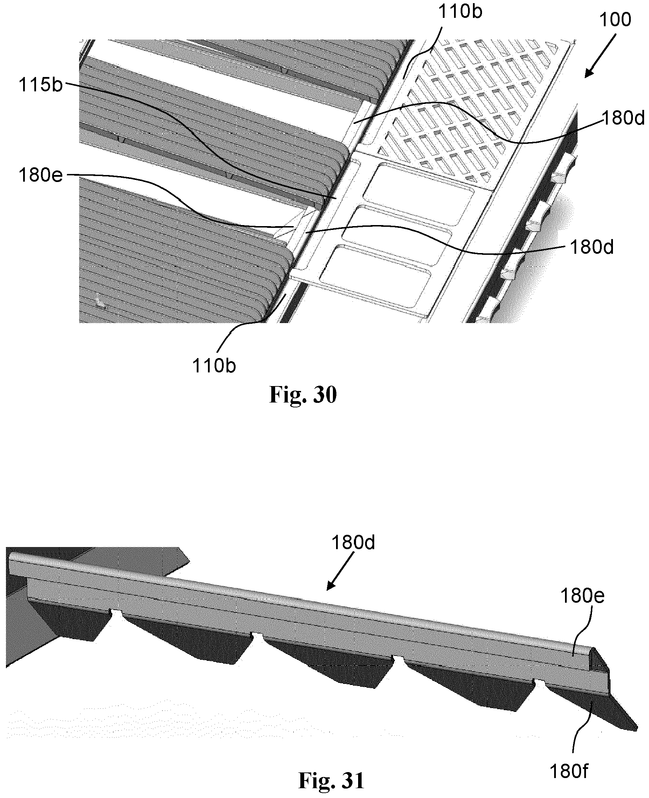

**Fig. 27** shows the collecting tray **180** floating under the working surfaces **110** and seasoning bowls **115** and above collecting tray **185.** As shown in **Figs. 17****,** **28****,** Benches **180g** on the sides of the collecting tray **180** hold the working surfaces **110** and the frame **115a** (see **Figs. 12**, 27) that accommodates and holds the seasoning bowls **115** in their respective openings **115c** (see **Figs. 12**, 29) above the collecting tray **180.** A bridge **180d** (see **Figs. 17****,** **29****,** **31****)** is placed over the edge **180h** (see **Figs. 17**, 28) bordering the cooking grid **105** on one side and bench **180g** of the collecting tray **180** on the other side facing the collecting tray **180.** The bridge **180d** provides a smooth, continuous path for juices coming out of the grilled food on the cooking grid **105** to flow down to the collecting trays, **185a, 180,** under the cooking grid **105** and the working surfaces and seasoning bowls, respectively. Openings **110b, 115b** (see **Figs. 5**, 30) in the working surfaces **110** and the frame **115a** that holds the bowls, respectively, make a gap between the working surfaces and frame and the edge of the cooking grid **105** to allow the food juices to flow over the bridge **180d** down to the collecting tray **180** underneath. The bridge **180d** has a front side **180f** that faces the front edge of the working surfaces **110** and seasoning bowls **115** that leads to collecting tray **180** and a rear side **180e** (see **Figs. 16****,** **20****,** **31****)** that faces the cooking grid **105** and leads to the collecting tray **185a** underneath and between the heat plates **160** that cover the gas burners **165.** The bridge **180d** allows fluids to drain right down into the collecting trays without coming in contact with the open fire of the gas burners **165** under the cooking grid **105,** staining and damaging the burners and vaporizing into fumes above the grill and obstructing the sight of the grilled food. The fluids collected in the collecting tray **180** also induce heat to preprocessed food on the working surfaces **110.** Further down they are drained to the collecting tray **185,** which is located under the collecting tray **180** through outlet **180a.**

## Claims

1. A multi-floor grill device comprising:
a top floor comprising an integrated working area with at least two types of working surfaces;
a bottom floor comprising fluid and residue collecting trays beneath said working surfaces;
a cabinet or body comprising inner volume that accommodates a plurality of gas burners and carrying said top floor;
a front control panel comprising a plurality of gas knobs for controlling gas flames which are set off in said gas burners; and
a partial hood comprising a top after-cooking grid,
wherein said two types of surfaces in said working area in said top floor comprise a cooking grid and working surfaces for processing foodstuff before placing on said cooking grid, wherein said working surfaces are adjacent and interface said cooking grid and in front of said cooking grid, said cooking grid and working surfaces create adjacent stations for processing said foodstuff,
wherein said cooking grid and fluids in said collecting trays induce heat on said working surfaces, wherein said heat of said working surfaces pre-warms said foodstuff before placing it on said cooking grid.

2. The multi-floor grill device according to claim 1, wherein said working surfaces are grated, wherein excess fluids and residues fall off of grate of said working surfaces to a collecting tray at said bottom floor and under said working surfaces.

3. The multi-floor grill device according claim 2, wherein said collecting tray comprises a drainage hole for draining fluids and food residues down to a second collecting tray.

4. The multi-floor grill device according to claim 3, wherein said second collecting tray is placed in a third collecting tray and occupying part of said third collecting tray, said second collecting tray is configured to be pulled out of said third tray for draining fluid residues of processed food on said working surface, said third tray is located under said cooking grid and configured to collect solid residues falling off of said foodstuff cooked on said cooking grid.

5. The multi-floor grill device according to claim 4, wherein said third tray is configured to be pulled out beneath said cooking grid and working surfaces.

6. The multi-floor grill device according to claim 1, wherein said working surfaces are configured to place a working board on them for processing said foodstuff before cooking, wherein said working board is placed over said working surfaces close to edge of said grill device, wherein location of said working board on said working surfaces creates an air gap between said working board and cooking grid, said air gap is configured to warm said foodstuff processed on said working board with heat induced by said cooking grid without cooking said foodstuff.

7. The multi-floor grill device according to claim 6, wherein said working surfaces further comprise securing means for securing said working board on them.

8. The multi-floor grill device according to claim 7, wherein said securing means are two or more poles, diagonally positioned at corners of said working surface relative each other, said poles matching edges of said working board and frictionally lock it in place.

9. The multi-floor grill device according to claim 1, wherein said gas burners are elongated rectangular gas burners with a plurality of gas outlets, said gas burners are arranged parallel each other along length of said cabinet/board, wherein gas pressure and streaming speed in gas pipes connecting between a gas tank and said gas burners and along length of said gas burners generate a stable, steady high temperature flame along entire length of said gas burners.

10. The multi-floor grill device according to claim 9, further comprising heat plates that cover an open fire gas of said elongated rectangular gas burners, wherein said heat plates comprise fins at their top part and along their length, said fins interrupt solid parts falling off of said foodstuff cooked on said cooking grid through grate of said grid and prevent them from resting, accumulating on top of said heat plates and force them down along slope of said heat plates and into a collecting tray under said gas burners.

11. The multi-floor grill device according to claim 1, wherein said control panel further comprises safety valve(s) that keep a gas pressure constant to prevent overpressure in gas pipes, and ignition knob(s) from igniting gas in said gas burners after opening gas flow to said gas burners with said gas knobs, said ignition knob(s) and gas knob(s) providing a double control on turning said gas flame on.

12. The multi-floor grill device according to claim 1, wherein said partial hood comprises side shields connected to side of said cabinet/body of said grill device, side supports connected to said side shields on one end and said top after-cooking grid on opposite end and a support back connecting said top after-cooking grid to back side of said cabinet/body of said grill device.

13. The multi-floor grill device according to claim 12, wherein said support back, side shields and walls of cabinet of said grill around said burners are covered with covers, said covers are configured to shield metallic body of said grill device from overheating, strain-stress and cooling-relaxation cycles due to high heat, burning, twisting and weakening over time and use, protecting walls and sensitive parts of said grill device from accumulated grease, food residues and dirt, and corrosion enhancing materials comprising water and detergents,
wherein said covers are detachable and replaceable.

14. The multi-floor grill device according to claim 1, wherein bottom edge of said cabinet/body is sloped to allow a user to more closely stand beside said grill device and process said foodstuff on said working surfaces.

15. The multi-floor grill device according to claim 1, wherein a collecting tray under said working surfaces comprises benches on its sides,
wherein said multi-floor grill device further comprises a frame, said frame comprising openings suitable for accommodating and holding seasoning bowls in said openings of said frame, wherein said benches hold said working surfaces and said frame above said collecting tray underneath,
wherein said working surfaces and said frame comprise an opening between said frame and an edge bordering said bench on one side and said cooking grid on the other side,
wherein said edge further comprises a bridge placed over said edge, said bridge comprising front and rear sides that enable flow of juices of said foodstuff cooked on said cooking grid down to said collecting tray floating beneath said working surfaces and seasoning bowls through said opening and to a collecting tray under said cooking grid.
